# EUROPÄISCHE PATENTSCHRIFT

(11) **EP 2 439 458 B1**
(45) Veröffentlichungstag und Bekanntmachung des Hinweises auf die Patenterteilung: **22.11.2017**
(21) Anmeldenummer: 11007831.8
(22) Anmeldetag: 27.09.2011
(51) Int. Cl.: F24H 1/20, F24H 9/18, H05B 3/82, F24H 9/00, H05B 3/06

(54) **Adaptionselement für Einschraubheizkörper eines Warmwasserspeichers**
Adaption element for screw-in heaters of a hot water boiler
Élément d'adaptation pour corps chauffant à visser d'un accumulateur d'eau chaude

(30) Priorität: 05.10.2010 AT 16572010
(43) Veröffentlichungstag der Anmeldung: 11.04.2012
(73) Patentinhaber: Vaillant GmbH, 42859 Remscheid (DE)
(72) Erfinder: Dorenburg, Michael, 40699 Erkrath (DE)
(74) Vertreter: Hocker, Thomas

(56) Entgegenhaltungen:
- EP-A1- 0 093 066
- EP-A1- 1 796 431
- EP-A2- 1 657 425
- DE-A1- 3 902 400
- DE-A1- 4 012 655
- US-A- 2 947 846
- US-A- 3 056 879
- US-A- 4 848 616
- US-A- 5 023 928
- US-A- 5 335 311

## Beschreibung

Die Erfindung bezieht sich auf ein Adaptionselement zum Verbinden eines Einschraubheizkörpers an einer Speichermuffe eines Warmwasserspeichers.

Warmwasserspeicher aus Stahl werden häufig mit einer Emaillebeschichtung gegen Korrosion geschützt: Da diese Beschichtung jedoch Zehrstellen und andere Fehler in der Emailleoberfläche aufweisen können, würde es dennoch zu Korrosion kommen. Hierbei greift im Wasser gelöster Sauerstoff das Metall an. Dem Metall werden Elektronen entzogen, während die positiv geladenen Ionen in die Lösung übergehen. Zum Schutz des Metalls werden Opferanoden eingesetzt. Hierbei handelt es sich um ein unedles Metall, beispielsweise Magnesium, das mit dem zu schützenden Metall elektrisch leitend verbunden wird. Das unedlere Metall fungiert dann als Anode und das zu schützende Metall als Kathode, wobei ein Stromfluss in Richtung des zu schützenden Metalls entsteht. Anstelle des zu schützenden Metalls gibt die unedlere Opferanode Elektronen an den Sauerstoff ab, wird dadurch oxidiert und geht in Lösung. Über das Wasser wird der Stromkreis geschlossen. Durch diesen Prozess braucht sich die Opferanode auf.

Optional werden in Warmwasserspeichern für die Nachheizung Einschraubheizkörper montiert. So kann beispielsweise im Sommerbetrieb der Inhalt eines solarbetriebenen Warmwasserspeichers bei Bewölkung, wenn unzureichend Solarwärme zur Verfügung steht, mittels eines elektrisch betriebenen Einschraubheizkörpers erhitzt werden.

Für den nachträglichen Einbau derartiger Einschraubheizkörper sind häufig mit Stopfen verschlossene Muffen am Speicher angebracht. Wird der Stopfen entfernt, so kann an Stelle dessen der Einschraubheizkörper eingeschraubt werden.

Ein montierter Edelstahl-Einschraubheizkörper stellt mit seinen blanken, im Wasser befindlichen Heizwendeln eine große Zehrstelle für die Speicheranode dar. Um zu vermeiden, dass die Opferanode permanent große Mengen Ionen an den Edelstahl-Einschraubheizkörper abgibt, müssen die beiden Bauteile voneinander elektrisch getrennt werden; das heißt, dass die den Edelstahl-Einschraubheizkörper aufnehmende Muffe über eine elektrische Isolierung verfügt, so dass von den Heizwendeln des Einschraubheizkörpers kein Stromfluss zur Anode (Potential des Speichers) erfolgt.

Ferner wird zur Vermeidung von Stromaustritt-Korrosion üblicherweise der Edelstahl-Einschraubheizkörper über einen definierten elektrischen Widerstand mit dem Potential des Speichers verbunden. Durch diesen Potentialabgleich werden die Heizwendeln durch eine begrenzte Stromabgabe kathodisch polarisiert, wobei der Widerstand derartig gewählt wird, dass der eigentliche Fehlstellenschutz der Emaillierung über die Anode des Speichers nicht gefährdet wird.

Diese aufwendige Konstruktion hat einerseits den bekannten Nachteil, dass der weit in den Speicher ragende Heizkörper ein Biegemoment auf die elektrisch isolierende Dichtung ausübt. Andererseits führen unvermeidbare Fertigungsungenauigkeiten bei der Komponentenherstellung zu Passungsproblemen. Auch Temperatursprünge im Heizbetrieb belasten die Lebensdauer der Dichtung.

Aus EP 93066 A1 ist ein elektrisch isolierendes Adaptionselement zum Verbinden eines Heizkörpers an eine Speichermuffe eines Warmwasserspeichers bekannt, bei welchem ein definierter Widerstand zwischen zwei Kontaktkörpern einen begrenzten Stromfluss ermöglicht.

Eingebaute Dichtungen mit der Zusatzfunktion, eine elektrische Isolierung zum beheizten Gerät zu bieten, dichten häufig die zu dichtenden Flächen nur unzureichend, so dass es zu Undichtigkeiten mit nachfolgendem Heizkörperausfall (Defekt durch Kurzschluss) kommen kann.

Der Erfindung liegt die Aufgabe zugrunde, eine Verbindung zwischen der Speichermuffe eines Warmwasserspeichers und einem Einschraubheizkörper zu schaffen, welche eine definierte elektrische Trennung und zugleich eine sichere hydraulische Dichtheit gewährleistet.

Dies wird gemäß den Merkmalen des unabhängigen Anspruchs 1 dadurch gelöst, dass ein Adaptionselement zum Verbinden eines Einschraubheizkörpers an einer Speichermuffe eines Warmwasserspeichers aus elektrisch isolierendem Material, vorzugsweise Kunststoff, hergestellt wird und im Wesentlichen eine zylindrische Form aufweist. Über jeweils ein Gewinde ist das Adaptionselement mit der Muffe und dem Heizkörper verbunden. Elektrisch leitende Kontaktkörper, zwischen denen ein elektrischer Widerstand angeordnet ist, ermöglichen einen definierten Stromfluss vom Heizkörper zum Speicherbehälter.

Durch das Adaptionselement ergibt sich zudem eine gute Zugänglichkeit zur Speichermuffe durch eine dicke Wärmedämmung hindurch, die ein wesentliches Teil eines jeden Speichers darstellt.

Bei den elektrisch leitenden Kontaktkörpern handelt es sich vorzugsweise jeweils um Ringe aus Messing.

Ringe ermöglichen bei einer Schraubverbindung eine optimale Kontaktierung der zueinander verschraubten Bauteile; Messing ermöglicht als weiches Metall eine Verformung, welche auch bei welligen Kontaktflächen sicher elektrisch kontaktiert. Ferner ist es bei der Herstellung leicht zerspanbar und in Verbindung mit Wasser korrosionsfest.

Die Ringe bieten durch eine Vorspannung am Adaptionselement Schutz gegen ein Anreißen des minderfesten Kunststoffs und bieten Schutz gegen äußere Beschädigung bei einer Montage mit Werkzeug oder ähnlichem.

Verfügt das Adaptionselement auf der Außenseite über zwei Flächen, vorzugsweise Zylinder- oder Kegelflächen und die Ringe über korrespondierende Flächen, so können die Ringe leicht mit dem Flansch verbunden werden. Bezüglich der Flächenform ist maßgeblich, dass die Ringe von der Seite auf den Flansch geschoben werden können.

Wenn die Ringe auf den dem Adaptionselements zugewandten Seite Flächen über Rillen verfügen, können Nocken auf den korrespondierenden Flächen des Verbindungsflanschs in diese eingreifen und somit die Ringe fixieren.

Vorteilhafte Ausgestaltungen der Erfindung ergeben sich durch die Merkmale der abhängigen Ansprüche.

Ist das erste Gewinde zum Verbinden mit der Speichermuffe ein Außengewinde und das zweite Gewinde zum Verbinden mit dem Einschraubheizkörper ein Innengewinde, so kann das Adaptionselement bei bauartsüblichen Verbindungen eingesetzt werden.

Die standardisierte Bauform des Adaptionselements mit Normgewinden erlaubt den Einsatz von vielen sehr einfach aufgebauten Heizkörpern (Marktverfügbarkeit), die ursprünglich für einen anderen Einsatzzweck konzipiert waren (z.B. nicht emaillierte Pufferspeicher).

Bei den elektrisch leitenden Kontaktkörpern handelt es sich vorzugsweise jeweils um Ringe aus Messing.
Ringe ermöglichen bei einer Schraubverbindung eine optimale Kontaktierung der zueinander verschraubten Bauteile; Messing ermöglicht als weiches Metall eine Verformung, welche auch bei welligen Kontaktflächen sicher elektrisch kontaktiert. Ferner ist es bei der Herstellung leicht zerspanbar und in Verbindung mit Wasser korrosionsfest.
Die Ringe bieten durch eine Vorspannung am Adaptionselement Schutz gegen ein Anreißen des minderfesten Kunststoffs und bieten Schutz gegen äußere Beschädigung bei einer Montage mit Werkzeug oder ähnlichem.
Verfügt das Adaptionselement auf der Außenseite über zwei vorzugsweise zylindrische oder kegelförmige Flächen und die Ringe über korrespondierende Flächen, so können die Ringe leicht mit dem Flansch verbunden werden. Bezüglich der Flächenform ist maßgeblich, dass die Ringe von der Seite auf den Flansch geschoben werden können.
Wenn die Ringe auf den dem Adaptionselements zugewandten Seite Flächen über Rillen verfügen, können Nocken auf den korrespondierenden Flächen des Verbindungsflanschs in diese eingreifen und somit die Ringe fixieren.
Ist der elektrische Widerstand im Inneren des Adaptionselements angeordnet, so ist er vor äußeren Angriffen geschützt. Besonders vorteilhaft ist es, wenn der Widerstand derart im Flansch positioniert ist, dass seine Anschlüsse direkten Kontakt zu den oben genannten Ringen haben und von diesen festgeklemmt werden.

Ist das Adaptionselement durch Dichtungen, vorzugsweise O-Ringe zum Einschraubheizkörper und der Speichermuffe abgedichtet, so ist der Flansch ausreichend gegen Wasseraustritt aus dem Inneren über die Muffe nach außen geschützt.

Die Erfindung wird nun anhand der Figuren detailliert erläutert. Hierbei zeigen:
Figur 1 einen Warmwasserspeicher mit einer Speichermuffe, in welche mittels eines erfindungsgemäßen Adaptionselements ein Einschraubheizkörper eingeschraubt ist,
Figur 2 die Verbindung des Einschraubheizkörpers mit der Speichermuffe mittels erfindungsgemäßen Adaptionselements im Detail,
Figur 3 das Adaptionselement im Detail sowie
Figur 4 die Verbindung als Explosionszeichnung.

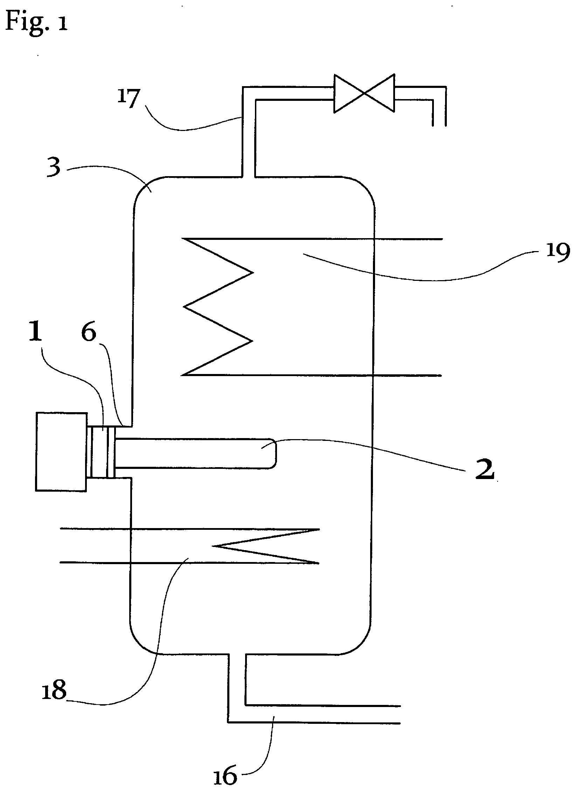

Figur 1 zeigt einen Warmwasserspeicher 3 mit einer Speichermuffe 6, in welche ein Einschraubheizkörper 2 eingeschraubt ist. Unten am Warmwasserspeicher 3 befindet sich ein Kaltwassereinlauf 16, oben eine Warmwasserleitung 17, die zu einer Zapfstelle führt. Im unteren Teil des Warmwasserspeichers 3 ist ein Solarwärmetauscher 18, der mit einem nicht dargestellten Solarkollektor verbunden ist, angeordnet. Im oberen Teil des Warmwasserspeichers 3 ist ein Wärmetauscher 19, der mit einem nicht dargestellten konventionellen Heizgerät verbunden ist, angeordnet.

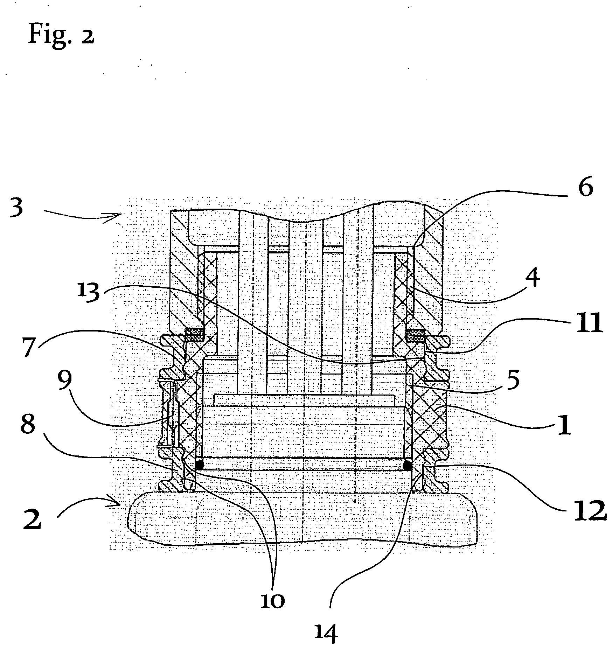

Figur 2 zeigt das im Wesentlichen zylindrischen Adaptionselement 1 aus elektrisch isolierendem Kunststoff als Verbindungselement zwischen dem Einschraubheizkörper 2 und der Speichermuffe 6 des Warmwasserspeichers 3. Das Adaptionselement 1 besitzt ein Außengewinde 4, das mit einem Innengewinde der Speichermuffe 6 verbunden ist. Auf der anderen Seite des Verbindungsflansches 1 verfügt dieses über ein Innengewinde 5, das mit einem Außengewinde des Einschraubheizkörpers 2 verschraubt ist.

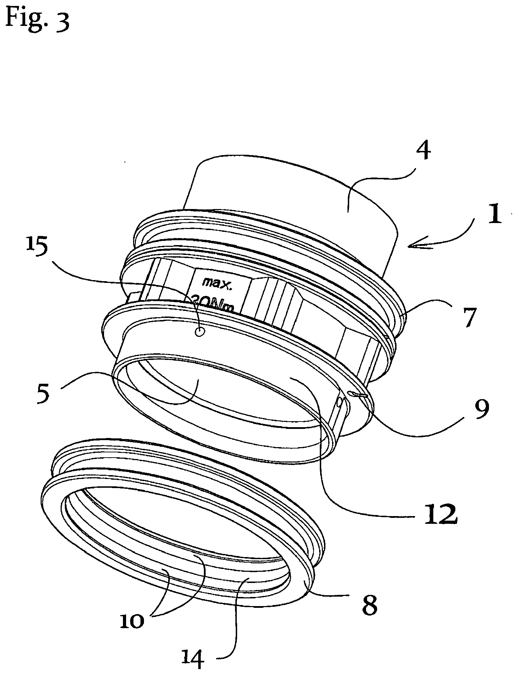

Auf zylindrischen Flächen 11, 12 auf der Außenseite parallel der Erstreckungslinie des Verbindungsflansches 1 sind zwei elektrisch leitende Ringe 7, 8 aus Metall als Kontaktkörper angeordnet. Diese Ringe 7, 8 verfügen auf der Innenseite über korrespondierende zylindrische 13, 14, über welche die Ringe 7, 8 mit dem Verbindungsflansch verbunden sind. Die Ringe 7, 8 verfügen in den zylindrischen Flächen 13, 14 jeweils über zwei Rillen 10, in welche Nocken 15, welche auf den zylindrischen Flächen 11, 12 des Adaptionselements 1 angeordnet sind, was aus Figur 3 hervorgeht, eingreifen. Hierüber sind die Ringe 7, 8 mit dem Adaptionselement 1 abrutschsicher verbunden.

Wie auch Figur 3 zu entnehmen ist, befindet sich im Adaptionselement 1 ein hochohmiger elektrischer Widerstand 9, dessen Kontakte an den beiden Ringen 7, 8 anliegen und somit einen elektrischen Kontakt schaffen.

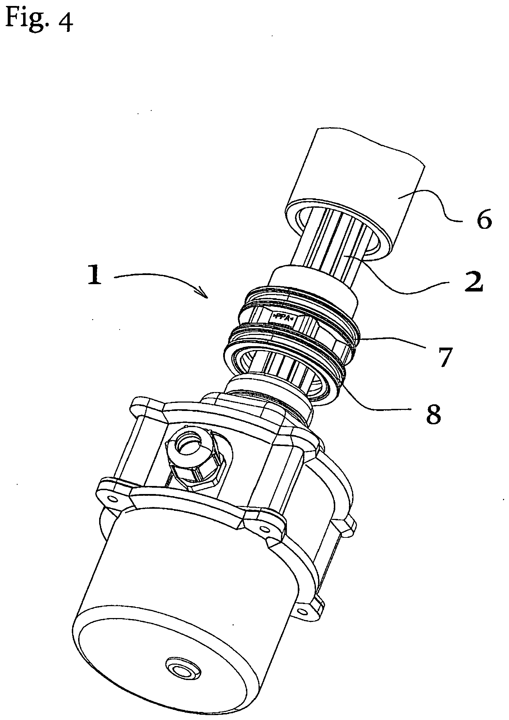

Figur 4 zeigt die Verbindung als Explosionszeichnung, wobei zwischen dem Adaptionselement 1 und dem Einschraubheizkörper 2 als auch die Speichermuffe 6 jeweils ein O-Ring zum Abdichten Verwendung finden kann.

Bei der Montage wird zunächst der nicht dargestellte Blindstopfen aus der Speichermuffe 6 entfernt. In das Adaptionselement 1 wird der elektrische Widerstand 9 eingelegt und seine Kontakte umgeboten. Dann werden die Ringe 7, 8 auf das Adaptionselement 1 geschoben, bis die Nocken 15 in die Ringe 10 einrasten. Unter Zwischenlage eines O-Ringes wird dann das Adaptionselement 1 in die Speichermuffe 6 eingeschraubt. Dann wird der Einschraubheizkörper 2 unter Zwischenlage eines O-Ringes in das Adaptionselement 1 eingeschraubt.

Bei Sonneneinstrahlung wird der Warmwasserspeichers 3 mittels des Solarwärmetauschers 18 beheizt. Weitere Wärme kann von einem konventionellen Heizgerät über den Wärmetauscher 19 eingebracht werden. Ist dessen Betrieb nicht gewünscht, so kann mittels des elektrischen Einschraubheizkörpers 2 Wärme eingebracht werden.

### Bezugszeichenliste

Adaptionselement 1
Einschraubheizkörper 2
Warmwasserspeicher 3
Außengewinde 4
Innengewinde 5
Speichermuffe 6
Ringe 7, 8
elektrischer Widerstand 9
Rillen 10
Flächen 11, 12
Flächen 13, 14
Nocken 15
Kaltwassereinlauf 16
Warmwasserleitung 17
Solarwärmetauscher 18
Wärmetauscher 19

## Patentansprüche

1. Adaptionselement (1) zum Verbinden eines Einschraubheizkörpers (2) an einer Speichermuffe (6) eines Warmwasserspeichers (3), wobei das Adaptionselement (1) aus elektrisch isolierendem Material, vorzugsweise Kunststoff, hergestellt ist,
im wesentlichen eine zylindrische Form aufweist,
an einem Ende über ein erstes Gewinde (4) zum Verbinden mit der Speichermuffe (6) verfügt,
an dem anderen Ende über ein zweites Gewinde (5) zum Verbinden mit dem Einschraubheizkörper (2) verfügt,
mit einem ersten, elektrisch leitenden Kontaktkörper (7) zum elektrischen Verbinden
mit der Speichermuffe (6) verbunden ist,
mit einem zweiten, elektrisch leitenden Kontaktkörper (8) zum elektrischen Verbinden
mit dem Einschraubheizkörper (2) verbunden ist und
zwischen dem ersten, elektrisch leitenden Kontaktkörper (7) und dem zweiten, elektrisch leitenden Kontaktkörper (8) ein elektrischer Widerstand (9) angeordnet ist,
**dadurch gekennzeichnet, dass** der erste und zweite, elektrisch leitende Kontaktkörper (7, 8) jeweils Ringe, vorzugsweise Messingringe, sind, das Adaptionselement (1) auf der Außenseite über zwei Flächen (11, 12) verfügt, die Ringe (7, 8) über korrespondierende Flächen (13, 14) verfügen, welche mit den Flächen (11, 12) des Adaptionselements (1) verbunden sind und die Ringe (7, 8) in den Flächen (13, 14) jeweils über mindestens eine Rille (10) verfügen, in welche Nocken (15), welche auf den Flächen (11, 12) des Adaptionselements (1) angeordnet sind, eingreifen.

2. Adaptionselement (1) nach Anspruch 1, **dadurch gekennzeichnet, dass** das erstes Gewinde (4) zum Verbinden mit der Speichermuffe (6) ein Außengewinde ist.

3. Adaptionselement (1) nach Anspruch 1 oder 2, **dadurch gekennzeichnet, dass** das zweite Gewinde (5) zum Verbinden mit dem Einschraubheizkörper (2) ein Innengewinde ist.

4. Adaptionselement (1) nach einem der Ansprüche 1 bis 3, **dadurch gekennzeichnet, dass** der elektrische Widerstand (9) im Inneren des Adaptionselements (1) angeordnet ist.

5. Adaptionselement (1) nach einem der Ansprüche 1 bis 4, **dadurch gekennzeichnet, dass** das Adaptionselement (1) durch Dichtungen, vorzugsweise O-Ringe zum Einschraubheizkörper (2) und der Speichermuffe (6) abgedichtet ist.

## Claims

1. Adaptation element (1) for connecting a screw-in heater (2) on a storage sleeve (6) of a hot water tank (3), wherein the adaptation element (1)
is made of electrically insulating material, preferably plastic,
has a substantially cylindrical shape,
comprises at one end a first thread (4) for connection to the storage sleeve (6), comprises at the other end a second thread (5) for connection to the screw-in heater (2),
is connected to a first electrically conductive contact body (7) for electrical connection with the storage sleeve (6),
is connected to a second electrically conductive contact body (8) for electrical connection with the screw-in heater (2) and
an electrical resistance (9) is arranged between the first electrically conductive contact body (7) and the second electrically conductive contact body (8),
**characterised in that**
the first and second electrically conductive contact bodies (7, 8) are rings, preferably brass rings, the adaptation element (1) comprises two surfaces (11, 12) on the outside, the rings (7, 8) have corresponding surfaces (13, 14) which are connected to the surfaces (11, 12) of the adaptation element (1), and the rings (7, 8) in the surfaces (13, 14) each comprise at least one groove (10) in which cams (15) which are arranged on the surfaces (11, 12) of the adaption element (1) engage.

2. Adaptation element (1) according to claim 1, **characterised in that** the first thread (4) for connection to the storage sleeve (6) is an external thread.

3. Adaptation element (1) according to claim 1 or 2, **characterised in that** the second thread (5) for connection to the screw-in heater (2) is an internal thread.

4. Adaptation element (1) according to any of claims 1 to 3, **characterised in that** the electrical resistance (9) is arranged inside the adaptation element (1).

5. Adaptation element (1) according to any of claims 1 to 4, **characterised in that** the adaptation element (1) is sealed by sealings, preferably O-rings, to the screw-in heater (2) and the storage sleeve (6).

## Revendications

1. Élément adaptateur (1) pour relier un corps chauffant à visser (2) à un manchon de réservoir (6) d'un réservoir d'eau chaude (3),
lequel élément adaptateur (1) est fabriqué en un matériau électriquement isolant, de préférence en plastique,
présente globalement une forme cylindrique,
dispose d'un premier filetage (4) à une extrémité en vue de la liaison avec le manchon de réservoir (6),
dispose d'un deuxième filetage (5) à l'autre extrémité en vue de la liaison avec le corps chauffant à visser (2),
est relié à un premier corps de contact (7) électriquement conducteur en vue de la liaison électrique avec le manchon de réservoir (6),
est relié à un deuxième corps de contact (8) électriquement conducteur en vue de la liaison électrique avec le corps chauffant à visser (2),
une résistance électrique (9) étant agencée entre le premier corps de contact (7) électriquement conducteur et le deuxième corps de contact (8) électriquement conducteur,
**caractérisé en ce que** les premier et deuxième corps de contact (7, 8) électriquement conducteurs sont à chaque fois des anneaux, de préférence des anneaux en laiton, **en ce que** l'élément adaptateur (1) dispose de deux surfaces (11, 12) sur le côté extérieur, **en ce que** les anneaux (7, 8) disposent de surfaces (13, 14) correspondantes qui sont reliées aux surfaces (11, 12) de l'élément adaptateur (1) et **en ce que** les anneaux (7, 8) disposent dans les surfaces (13, 14) à chaque fois d'au moins une rainure (10) dans laquelle pénètrent des ergots (15) qui sont agencés sur les surfaces (11, 12) de l'élément adaptateur (1).

2. Élément adaptateur (1) selon la revendication 1, **caractérisé en ce que** le premier filetage (4) destiné à la liaison avec le manchon de réservoir (6) est un filetage extérieur.

3. Élément adaptateur (1) selon la revendication 1 ou 2, **caractérisé en ce que** le deuxième filetage (5) destiné à la liaison avec le corps chauffant à visser (2) est un filetage intérieur.

4. Élément adaptateur (1) selon l'une des revendications 1 à 3, **caractérisé en ce que** la résistance électrique (9) est agencée à l'intérieur de l'élément adaptateur (1).

5. Élément adaptateur (1) selon l'une des revendications 1 à 4, **caractérisé en ce que** l'élément adaptateur (1) est étanchéifié par rapport au corps chauffant à visser (2) et au manchon de réservoir (6) par des garnitures d'étanchéité, de préférence par des joints toriques d'étanchéité.
